# EUROPÄISCHE PATENTSCHRIFT

(11) **EP 1 589 253 B1**
(45) Veröffentlichungstag und Bekanntmachung des Hinweises auf die Patenterteilung: **15.11.2006**
(21) Anmeldenummer: 05007728.8
(22) Anmeldetag: 08.04.2005
(51) Int. Cl.: F16F 9/05

(54) **Luftfeder**
Gas spring
Ressort à gaz

(30) Priorität: 22.04.2004 DE 102004020211; 01.07.2004 DE 102004031873
(43) Veröffentlichungstag der Anmeldung: 26.10.2005
(73) Patentinhaber: ZF FRIEDRICHSHAFEN AG, 88046 Friedrichshafen (DE)
(72) Erfinder: Gross, Alexander, 97653 Bischofsheim (DE); Gubitz, Holger, 97422 Schweinfurt (DE); Nowotka, Thomas, 95700 Ebelsbach (DE)

(56) Entgegenhaltungen:
- DE-A1- 10 041 927
- DE-C1- 19 522 459
- US-A- 2 915 088
- US-A- 4 502 673

## Beschreibung

Die Erfindung betrifft eine Luftfeder entsprechend dem Oberbegriff von Patentanspruch 1.

Aus der DE 88 13 045 U1 ist ein Abrollrohr für eine Luftfeder bekannt. Das Abrollrohr besteht aus einem Kunststoff, wobei der wesentliche Vorteil darin besteht, dass die relativ komplizierte Abrollkontur in Verbindung mit einer qualitativ hochwertigen Oberflächengüte vergleichsweise preiswerter herstellbar ist als eine entsprechende metallische Ausführung. Das in der DE 88 13 045 U1 dargestellte Abrollrohr verfügt über eine vergleichsweise einfache Innenkontur mit hinterschneidungsfreien axial verlaufenden Stegen. Wenn die Taille des Abrollkolbens deutlich stärker eingezogen ist, entstehen bei diesem Konstruktionsprinzip zwangsläufig Materialanhäufungen, die einerseits kostentreibend sind, das Gewicht erhöhen und andererseits die Spritzeigenschaften verschlechtern, da bei ungleichmäßiger Materialverteilung unterschiedliche Abkühlungen innerhalb des Bauteils auftreten. Des Weiteren ist mit dem Verzug des Bauteils zu rechnen, so dass u. U. eine geforderte Maßhaltigkeit nicht eingehalten werden kann. Abhilfe könnte ggf. eine längere Zykluszeit mit gezielter verlangsamter Abkühlung bringen.

Die gattungsbildende US 4,502,673 betrifft eine Luftfeder mit einem Rollbalg, der endseitig an einem Deckel befestigt ist. Das andere Ende ist mittels eines Klemmrings an einem Abrollrohr fixiert, wobei der Rollbalg bei einer Federungsbewegung der Luftfeder auf der Außenmantelfläche des Abrollrohres abrollt. Das Abrollrohr besteht aus zwei zylindrischen Baugruppen, die axial in Reihe angeordnet und über eine Schraubverbindung zusammengehalten werden.

Aus der US 2,915,088 ist ein Rohrkörper bekannt, der sich aus zwei schalenförmigen Einzelelementen zusammensetzt, die an einer schrägverlaufenden Teilungsfuge formschlüssig miteinander verbunden sind. Auf der Außenmantelfläche sind ggf. Abzweigrohranschlüsse ausgeführt.

Die Aufgabe der vorliegenden Erfindung besteht darin, eine Luftfeder derart weiter zu entwickeln, dass auch kompliziertere Innenkonturen des Abrollrohres möglich sind.

Erfindungsgemäß wird die Aufgabe durch die Merkmale des Patentanspruchs 1 gelöst.

Der große Vorteil der Erfindung besteht darin, dass man unabhängig von der Herstellungsart des Abrollrohres an sich eine funktionalere Innenkontur herstellen kann. Bei einem Abrollrohr aus einem gespritzten Kunststoff können somit günstige Materialverteilungen und Versteifungsrippen vorgenommen werden.

Generell einfacher ist es, wenn die Teilungsfuge parallel zu Längsachse des Abrollrohres verläuft. Im Hinblick auf eine günstige Abdichtung der schalenförmigen Einzelelemente kann mindestens eine Teilungsfuge zwischen den Einzelelementen schräg zur Längsachse verlaufen. Bei einer axialen Belastung der Einzelelemente werden diese im Bereich der Teilungsfuge zueinander verspannt

In weiterer vorteilhafter Ausgestaltung sind zwischen den Einzelelementen Dichtmittel angeordnet. Wenn die Dichtmittel auf das Einzelelement aufgespritzt sind, kann man den Konturverlauf der Teilungsfuge(n) konstruktiv freier gestalten, da man nicht auf vorgefertigte Dichtleisten oder Dichtringe zurückgreifen muss. Des Weiteren entfällt der Montageaufwand für einen separaten Dichtring.

Des Weiteren ist in vorteilhafter Ausgestaltung vorgesehen, dass ein Einzelelement mindestens eine Axialstützfläche für das mindestens eine weitere Einzelelement aufweist. Die Axialstützfläche verhindert, dass die beiden Einzelelemente über ihre Endmontagelage hinaus gegeneinander verschoben werden können.

Zusätzlich sichert in vorteilhaften Ausgestaltung mindestens ein Sicherungsmittel an mindestens einem der Einzelelemente die Endmontageposition der Einzelelemente zueinander. Damit bildet das Abrollrohr eine in sich geschlossene Baueinheit.

Um ein Öffnen der Sicherungsmittel wirksam zu verhindern, wird in vorteilhafter Ausgestaltung das Sicherungsmittel von mindestens einem Schnapphaken gebildet, der an dem mindestens einen anderen Einzelelement angreift.

Zusätzlich weist in vorteilhafter Ausgestaltung ein Einzelelement mindestens einen Radialhalter für das mindestens eine weitere Einzelelement auf. Damit kann das Abrollrohr im Endmontagezustand auch nicht mehr durch eine radiale Belastung demontiert werden.

Zusätzlich besteht die Möglichkeit, dass die Einzelelemente des Abrollrohrs von einem Fixierring gesichert werden. Der Fixierring kann z. B. von einer Klemmschelle für den Rollbalg der Luftfeder gebildet werden.

Alternativ kann aber auch mindestens eines der Einzelelemente Befestigungsmittel aufweisen, die mit dem Fixierring in Wirkverbindung treten.

So kann die Wirkverbindung zwischen dem Fixierring und dem mindestens einen Einzelelement von Zapfen gebildet werden, die in Aufnahmen eingreifen. Sinnvollerweise verfügen mindestens zwei Einzelelemente über die besagten Zapfen und werden von dem Fixierring radial zueinander gesichert.

Damit sich die Wirkverbindung während des Luftfederbetriebs nicht selbsttätig löst, sind die Zapfen mit Sicherungsrasten versehen. Die Sicherungsrasten wirken wie Widerhaken.

Zusätzlich kann der Fixierring genutzt werden, um eine Klemmkraft auf einen Rollbalg der Luftfeder auszuüben.

Damit die notwendige Klemmkraft für den Fixierring klein gehalten werden kann, weist das Abrollrohr einen umlaufenden Rand auf, über den der Rollbalg gestülpt ist, wobei der Fixierring den Rollbalg am Abrollrohr klemmt. Der Druck innerhalb des Rollbalgs und die Reibkraft zwischen dem Rollbalg und dem Abrollrohr unterstützen die Klemmwirkung.

Zusätzlich besteht noch unabhängig von den eingesetzten Dicht- und Sicherungsmitteln die Möglichkeit, dass die Einzelelemente miteinander verschweißt oder verklebt sind.

Anhand der folgenden Figurenbeschreibung soll die Erfindung näher erläutert werden.

Es zeigt:
- Fig. 1: Luftfeder in einer Gesamtschnittdarstellung
- Fig. 2: Erfindungsgemäßes Abrollrohr für eine Luftfeder in einer Explosionsdarstellung
- Fig. 3: Abrollrohr mit Teilausschnitt zur Darstellung einer Axialstützfläche
- Fig. 4: Abrollrohr mit Darstellung der Wirkungsweise des Fixierrings
- Fig. 5: Detaildarstellung zur Fig. 4
- Fig. 6: Querschnittdarstellung zur Fig. 4
- Fig. 7: Ausschnitt aus Fig. 6

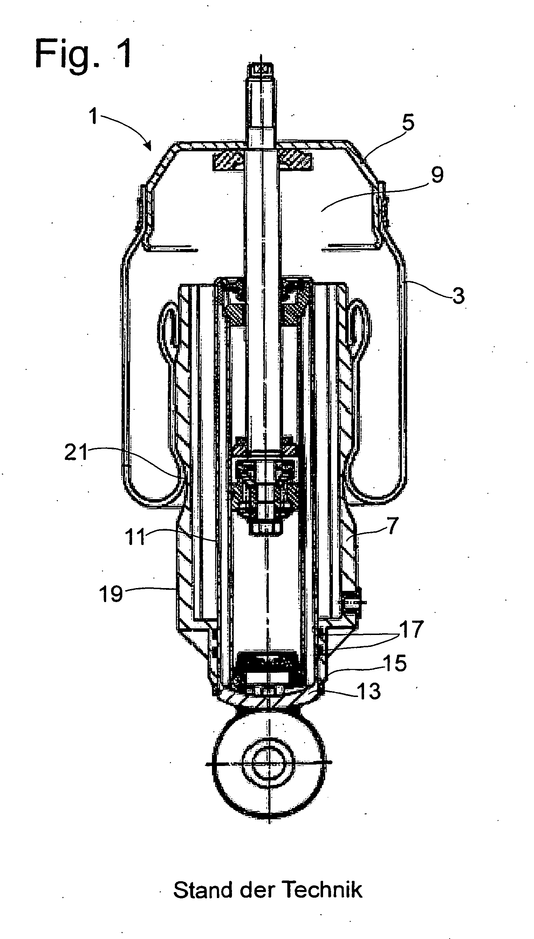

Die Fig. 1 zeigt eine Luftfeder 1, wie sie aus der DE 88 13 045 U1 bekannt ist. Die Luftfeder 1 umfasst einen Rollbalg 3, der mit seinem einen Ende über einen Klemmring mit einem Deckel 5 und mit seinem anderen Ende mit einem Abrollrohr 7 verbunden ist. Der abgedichtete Deckel 5, der Rollbalg 3 und das Abrollrohr 7 bestimmen einen gasgefüllten Federraum 9, der eine Tragkraft ausübt. In diesem Verwendungsbeispiel einer Luftfeder ist koaxial zum Abrollrohr ein Schwingungsdämpfer angeordnet, der ein Behälterrohr 11 aufweist, an dem ein Tragring 13 befestigt ist. Mit einer unteren Stirnfläche 15 stützt sich das Abrollrohr axial am Behälterrohr ab. Damit keine Druckverluste auftreten, verfügt die Luftfeder über mindestens einen Dichtring 17.

Der Rollbalg rollt bei einer Federungsbewegung auf der Außenwandung 19 des Abrollrohres ab. Eine Einschnürung 21 sorgt für eine hubabhängige Federkraftkennlinie der Luftfeder.

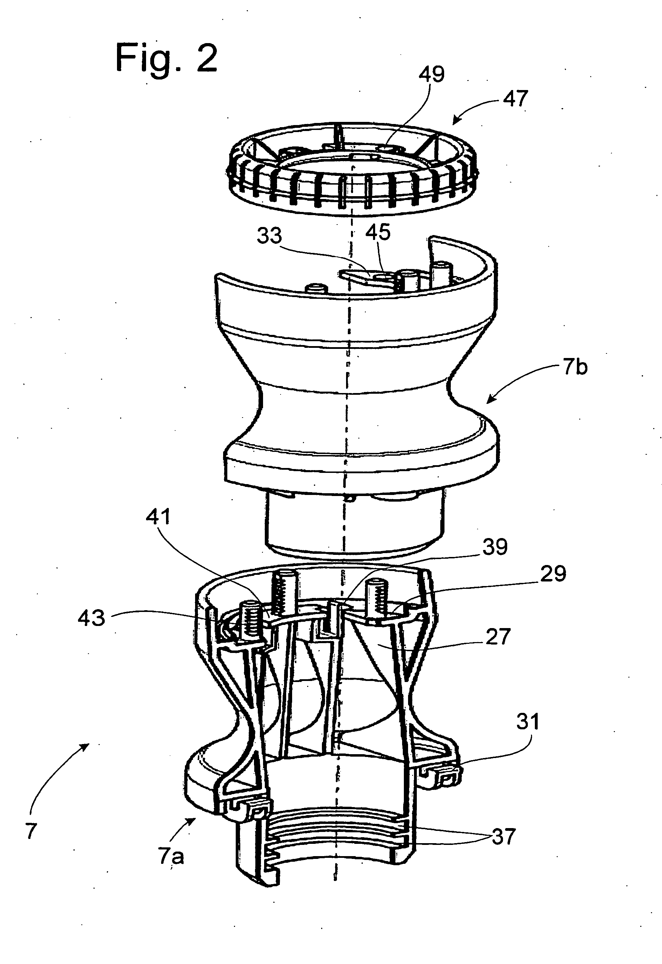

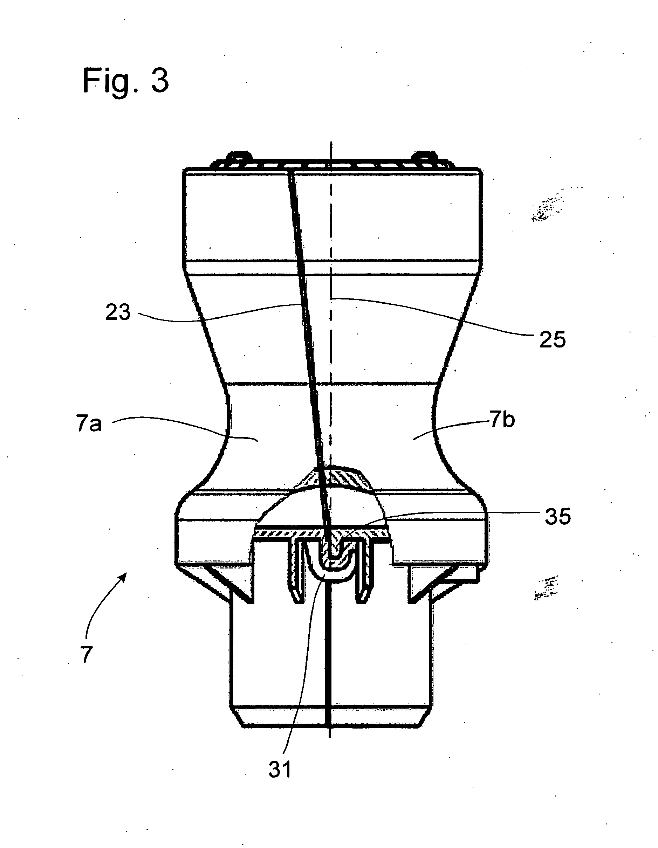

Die Fig. 2 zeigt eine Explosionszeichnung des erfindungsgemäßen Abrollrohres 7. Wie aus der Zeichnung ersichtlich ist, besteht das Abrollrohr 7 aus zwei schalenförmigen Einzelelementen 7a; 7b. Dabei liegt eine Teilungsfuge 23 parallel oder bevorzugt schräg zur Längsachse 25 des Abrollrohres vor, wie aus der Fig. 3 ersichtlich ist. An der Innenwandung der Einzelelemente können Versteifungsrippen 27 angeformt sein, die bevorzugt quer zu einer von der Teilungsfuge bestimmten Teilungsebene verlaufen. Das Abrollrohr besteht aus einem urformbaren Werkstoff, z. B. einem spritzgegossenen Kunststoff. Bei dieser Ausrichtung der Versteifungsrippen können die Einzelelemente leicht entformt werden.

Bei der Montagebewegung werden die beiden Einzelelemente 7a; 7b axial zueinander positioniert. Dabei werden Axialstützflächen 29; 31 an den Einzelelementen wirksam. Auf der Axialstützfläche 29 liegt im montierten Zustand mindesten ein Haltesteg 33 an. Die Fig. 3 zeigt die Wirkungsweise der Axialstützfläche 31, die fingerartig ausgestaltet ist und einen Tragsteg 35 des Einzelelements 7b umgreift. Die fingerartige Axialstützfläche 31 wirkt auch als ein Radialhalter, um ein Auseinanderdriften der beiden Einzelelemente zu verhindern. Aus der Fig. 2 ist ferner ersichtlich, dass Ringnuten 37 für die Dichtringe 17 (entsprechend der Fig. 1) leicht herstellbar sind.

Auf einer oberen Stirnfläche 41 des Einzelelementes 7a ist ein Sicherungsmittel in Form von mindestens einem Schnapphaken 39 angeordnet, der die Endmontageposition der Einzelelemente zueinander sichert. Des weiteren erstrecken sich auf der oberen Stirnfläche 41 axial verlaufende Zapfen 43, die in Aufnahmen 45, der Haltestege 33 eingreifen und damit in Wirkverbindung treten. Die Zapfen und die Aufnahmen in Verbindung mit den Haltestegen wirken ebenfalls als Radialhalter, so dass die Einzelelemente eine in sich geschlossene Baueinheit bilden können.

Alternativ zu einem radial angreifenden Klemmring für den Abrollbalg kann auch ein Fixierring 47 verwendet werden, der mit den als Befestigungsmitteln wirksamen Zapfen 43 in Wirkverbindung tritt, indem die Zapfen 43 in Klemmöffnungen 49 des Fixierrings 47 eintauchen. Damit der Fixierring verliersicher montierbar ist, sind die Zapfen mit sägezahnförmigen Sicherungsrasten 51 versehen.

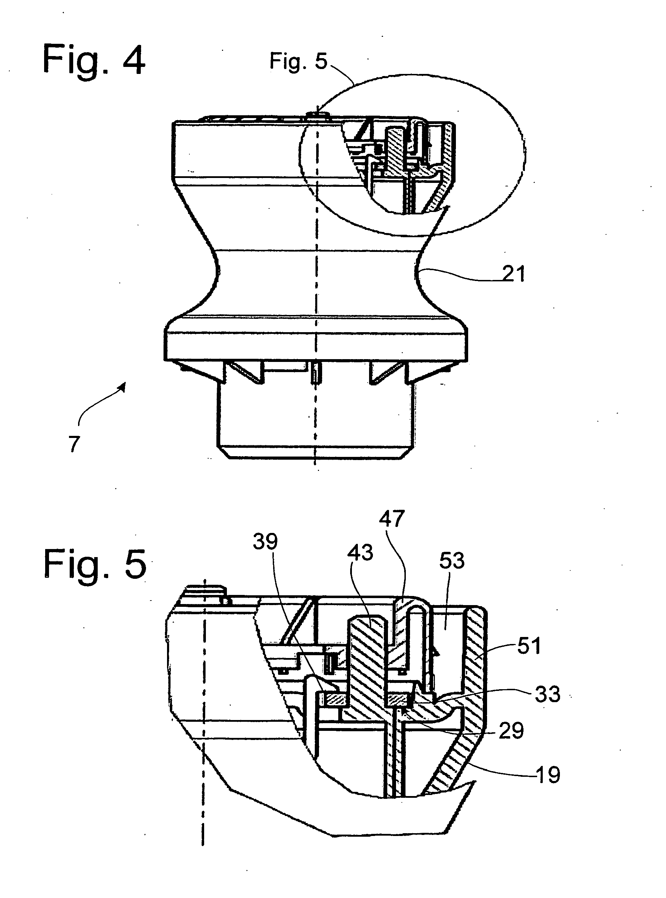

Die Fig. 4 zeigt das Abrollrohr 7 im Endmontagezustand. Aus der Ausschnittvergrößerung gemäß Fig. 5 ist erkennbar, das der Haltesteg 33 auf der Axialstützfläche 29 aufliegt und die Zapfen 43 mit dem Fixierring 47 in Wirkverbindung stehen. Ebenfalls sind die Schnapphaken 39 in der vorgesicherten Position erkennbar, d. h., dass sie sich auch dem Haltesteg abstützen und eine axiale Verschiebebewegung der beiden Einzelelemente verhindern.

Das Abrollrohr 7 weist einen umlaufenden Rand 51 auf der mit seiner Innenseite zusammen mit der Außenseite des Fixierrings 47 einen Ringkanal 53 bildet. Der Rollbalg nach der Fig. 1 wird endseitig in den Ringkanal eingeführt, über den Rand 51 gestülpt, so dass er auf der Außenwand 19 anliegen kann. Der Fixierring 47 kann dann den Rollblag am Abrollrohr klemmen.

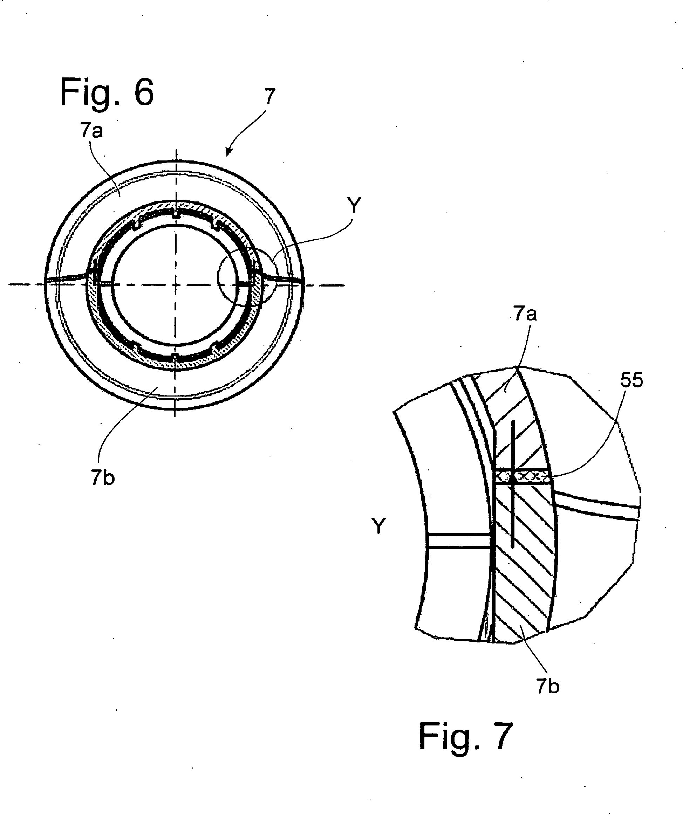

Die Figuren 6 zeigt einen Querschnitt durch das Abrollrohr im Bereich der Einschnürung 21. In der Ausschnittvergrößerung gemäß der Fig. 7 ist erkennbar, dass zwischen den Einzelelementen 7a; 7b innerhalb der Teilungsfuge Dichtmittel 55 angeordnet, z. B. als eine Weichkomponente angespritzt sind. Alternativ oder ergänzend können an dieser Stelle die Einzelelemente auch miteinander verschweißt oder verklebt sein, um einen Druckverlust im Federraum zu unterbinden.

## Patentansprüche

1. Luftfeder (1), umfassend einen Rollbalg (3), der mit einem Ende an einen Deckel (5) und mit seinem anderen Ende an einem Abrollrohr (7) befestigt ist, wobei der Deckel (5) zusammen mit dem Rollbalg (3) und dem Abrollrohr (7) einen Federraum (9) bestimmen, und der Rollbalg (3) bei einer Federungsbewegung auf einer Außenwandung (19) des Abrollrohres (7) abrollt, wobei das Abrollrohr (7) mehrteilig ausgeführt ist und mindestens eine Teilungsfuge (23) aufweist,
**dadurch gekennzeichnet,**
**dass** das Abrollrohr (7) aus mindestens zwei schalenförmigen Einzelelementen (7a; 7b) besteht und die mindestens eine Teilungsfuge (23) zwischen den Einzelelementen (7a; 7b) parallel oder schräg zur Längsachse (25) des Abrollrohrs (7) verläuft.

2. Luftfeder nach Anspruch 1,
**dadurch gekennzeichnet,**
**dass** zwischen den Einzelelementen (7a; 7b) Dichtmittel (55) angeordnet sind.

3. Luftfeder nach Anspruch 2,
**dadurch gekennzeichnet,**
**dass** die Dichtmittel (55) auf das Einzelelement (7a; 7b) aufgespritzt sind.

4. Luftfeder nach Anspruch 1,
**dadurch gekennzeichnet,**
**dass** ein Einzelelement (7a; 7b) mindestens eine Axialstützfläche(29; 31) für das mindestens eine weitere Einzelelement (7a; 7b) aufweist.

5. Luftfeder nach Anspruch 1,
**dadurch gekennzeichnet,**
**dass** mindestens ein Sicherungsmittel (39) an mindestens einem der Einzelelemente (7a; 7b) die Endmontageposition der Einzelelemente (7a; 7b) zueinander sichert.

6. Luftfeder nach Anspruch 5,
**dadurch gekennzeichnet,**
**dass** das Sicherungsmittel von mindestens einem Schnapphaken (39) gebildet wird, der an dem mindestens einen anderen Einzelelement (7a; 7b) angreift.

7. Luftfeder nach Anspruch 1,
**dadurch gekennzeichnet,**
**dass** ein Einzelelement (7a; 7b) mindestens einen Radialhalter (31) für das mindestens eine weitere Einzelelement (7a; 7b) aufweist.

8. Luftfeder nach Anspruch 1,
**dadurch gekennzeichnet,**
**dass** die Einzelelemente (7a; 7b) des Abrollrohrs von einem Fixierring (47) gesichert werden.

9. Luftfeder nach Anspruch 8,
**dadurch gekennzeichnet,**
**dass** mindestens eines der Einzelelemente (7a; 7b) Befestigungsmittel aufweist, die mit dem Fixierring (47) in Wirkverbindung treten.

10. Luftfeder nach Anspruch 9.
**dadurch gekennzeichnet,**
**dass** die Wirkverbindung von Zapfen (43) gebildet werden, die in Aufnahmen (49) eingreifen.

11. Luftfeder nach Anspruch 10,
**dadurch gekennzeichnet,**
**dass** die Zapfen(43) mit Sicherungsrasten (51) versehen sind.

12. Luftfeder nach Anspruch 8,
**dadurch gekennzeichnet,**
**dass** der Fixierring (47) eine Klemmkraft auf den Rollbalg (3) der ausübt.

13. Luftfeder nach Anspruch 12,
**dadurch gekennzeichnet,**
**dass** das Abrollrohr (7) einen umlaufenden Rand (51) aufweist, über den der Rollbalg (3) gestülpt ist, wobei der Fixierring (47) den Rollbalg (3) am Abrollrohr (7) klemmt.

14. Luftfeder nach Anspruch 1,
**dadurch gekennzeichnet,**
**dass** die Einzelelemente (7a; 7b) miteinander verschweißt sind.

15. Luftfeder nach Anspruch 1,
**dadurch gekennzeichnet,**
**dass** die Einzelelemente (7a; 7b) miteinander verklebt sind.

## Claims

1. Pneumatic spring (1) comprising a U-bellows (3), which is fixed by one end to a cover (5) and by the other end thereof to a roll tube (7), the cover (5) together with the U-bellows (3) and the roll tube (7) defining a spring chamber (9), and the U-bellows during a suspension movement rolling on an outside wall (19) of the roll tube (7), the roll tube (7) being of multipart construction and having at least one dividing joint (23), **characterized in that** the roll tube (7) comprises at least two shell-shaped individual elements (7a; 7b) and that at least one dividing joint (23) runs between the individual elements (7a; 7b) parallel or obliquely to the longitudinal axis (25) of the roll tube (7).

2. Pneumatic spring according to Claim 1,
**characterized in that** sealant means (55) are arranged between the individual elements (7a; 7b).

3. Pneumatic spring according to Claim 2,
**characterized in that** the sealant means (55) is sprayed onto the individual element (7a; 7b).

4. Pneumatic spring according to Claim 1,
**characterized in that** one individual element (7a; 7b) has at least one axial thrust face (29; 31) for at least one further individual element (7a; 7b).

5. Pneumatic spring according to Claim 1, **characterized in that** at least one securing device (39) on at least one of the individual elements (7a; 7b) secures the final assembly position of the individual elements (7a; 7b) in relation to one another.

6. Pneumatic spring according to Claim 5, **characterized in that** the securing device is formed by at least one snap-hook (39), which acts on at least one other individual element (7a; 7b).

7. Pneumatic spring according to Claim 1, **characterized in that** one individual element (7a; 7b) has at least one radial holder (31) for at least one further individual element (7a; 7b).

8. Pneumatic spring according to Claim 1, **characterized in that** the individual elements (7a; 7b) of the roll tube are secured by a fixing ring (47).

9. Pneumatic spring according to Claim 8, **characterized in that** at least one of the individual elements (7a; 7b) has fasteners, which come into operative connection with the fixing ring (47).

10. Pneumatic spring according to Claim 9, **characterized in that** the operative connection takes the form of pivots (43), which engage in mountings (49).

11. Pneumatic spring according to Claim 10, **characterized in that** the pivots (43) are provided with securing catches (51).

12. Pneumatic spring according to Claim 8, **characterized in that** the fixing ring (47) exerts a clamping force on the U-bellows (3).

13. Pneumatic spring according to Claim 12, **characterized in that** the roll tube (7) has a peripheral edge (51), over which the U-bellows (3) is reverse-drawn, the fixing ring (47) clamping the U-bellows (3) to the roll tube (7).

14. Pneumatic spring according to Claim 1, **characterized in that** the individual elements (7a; 7b) are welded together.

15. Pneumatic spring according to Claim 1, **characterized in that** the individual elements (7a; 7b) are adhesively bonded together.

## Revendications

1. Amortisseur pneumatique (1) qui comprend un soufflet déroulant (3) dont une extrémité est fixée à un couvercle (5) et l'autre extrémité à un tube de déroulement (7), le couvercle (5) définissant avec le soufflet déroulant (3) et le tube de déroulement (7) un espace d'amortissement (9), le soufflet déroulant .(3) se déroulant et/ou s'enroulant sur une paroi extérieure (19) du tube de déroulement (7) lors d'un déplacement d'amortissement, le tube de déroulement (7) étant réalisé en plusieurs pièces et présentant au moins un joint de séparation (23),
**caractérisé en ce que**
le tube de déroulement (7) est constitué d'au moins deux éléments individuels (7a; 7b) en forme de coquille et **en ce que** le ou les joints de séparation (23) entre les éléments individuels (7a; 7b) s'étendent parallèlement ou obliquement par rapport à l'axe longitudinal (25) du tube de déroulement (7).

2. Amortisseur pneumatique selon la revendication 1,
**caractérisé en ce que** des moyens d'étanchéité (55) sont disposés entre les éléments individuels (7a; 7b).

3. Amortissement pneumatique selon la revendication 2,
**caractérisé en ce que** les moyens d'étanchéité (55) sont moulés par injection sur les éléments individuels (7a, 7b).

4. Amortisseur pneumatique selon la revendication 1,
**caractérisé en ce qu'**un élément individuel (7a; 7b) présente au moins une surface d'appui axial (29; 31) pour le ou les autres éléments individuels (7a; 7b).

5. Amortisseur pneumatique selon la revendication 1,
**caractérisé en ce qu'**au moins un moyen de fixation (39) situé sur au moins l'un des éléments individuels (7a; 7b) fixe la position finale mutuelle de montage des éléments individuels (7a; 7b).

6. Amortisseur pneumatique selon la revendication 5,
**caractérisé en ce que** le moyen de fixation est formé par au moins un crochet (39) à accrochage élastique qui s'engage au moins sur le ou les autres éléments individuels (7a; 7b).

7. Amortisseur pneumatique selon la revendication 1,
**caractérisé en ce qu'**un élément individuel (7a; 7b) présente au moins un support radial (31) pour le ou les autres éléments individuels (7a; 7b).

8. Amortisseur pneumatique selon la revendication 1,
**caractérisé en ce que** les éléments individuels (7a; 7b) du tube de déroulement sont fixés à l'aide d'un anneau de fixation (47).

9. Amortisseur pneumatique selon la revendication 8,
**caractérisé en ce qu'**au moins l'un des éléments individuels (7a; 7b) présente des moyens de fixation qui coopèrent avec l'anneau de fixation (47).

10. Amortisseur pneumatique selon la revendication 9,
**caractérisé en ce que** la coopération est obtenue à l'aide de tourillons (43) qui s'engagent dans des logements (49) .

11. Amortisseur pneumatique selon la revendication 10,
**caractérisé en ce que** les tourillons (43) sont dotés de cliquets de blocage (51).

12. Amortisseur pneumatique selon la revendication 8,
**caractérisé en ce que** l'anneau de fixation (47) exerce une force de serrage sur le soufflet déroulant (3).

13. Amortisseur pneumatique selon la revendication 12,
**caractérisé en ce que** le tube de déroulement (7) présente un bord périphérique (51) au-dessus duquel le soufflet déroulant (3) est embouti, l'anneau de fixation (47) serrant le soufflet déroulant (3) sur le tube de déroulement (7).

14. Amortisseur pneumatique selon la revendication 1,
**caractérisé en ce que** les éléments individuels (7a; 7b) sont soudés l'un à l'autre.

15. Amortisseur pneumatique selon la revendication 1,
**caractérisé en ce que** les éléments individuels (7a; 7b) sont collés l'un à l'autre.
